# EUROPÄISCHE PATENTANMELDUNG

(11) **EP 1 808 420 A2**
(43) Veröffentlichungstag der Anmeldung: **18.07.2007**
(21) Anmeldenummer: 07100509.4
(22) Anmeldetag: 15.01.2007
(51) Int. Cl.: C04B 14/04, C04B 28/02

(54) **Baustoff für die Anwendung im Innenbereich von Bauwerken**

(30) Priorität: 16.01.2006 DE 102006002193
(71) Anmelder: Knauf Marmorit GmbH, 79283 Bollschweil (DE)
(72) Erfinder: Benz, Theophil, 79239 Ehrenkirchen (DE); Kudlek, Stefan, 79117 Freiburg (DE)
(74) Vertreter: von Kreisler Selting Werner

(57) **Zusammenfassung**

Verwendung von Baumaterialien enthaltend
- Bindemittel,
- Zuschläge,
- Zeolithe
zur Verminderung von Luftschadstoffen in Innenräumen

## Beschreibung

Die Erfindung betrifft einen Baustoff für die Anwendung im Innenbereich von Bauwerken von Wänden und Gebäudedecken.

Durch die Energieeinsparbemühungen z.B. gemäß der deutschen Energieeinsparverordnung werden Gebäudehüllen immer dichter, mit entsprechend sinkenden Luftwechselraten. Dies kann zu Problemen bei der Qualität der Innenraumluft führen, wodurch auch die Gesundheit der Bewohner eines Gebäudes leiden kann.

Erhöhte Luftschadstoffkonzentrationen in Innenräumen sind keine Seltenheit und führen zu den verschiedensten Krankheitsbildern bei den Bewohnern. Bekannt ist das sogenannte "Sick Building Syndrom", es beschreibt allergische Reaktionen bei den Betroffenen, die auftreten, solange sich diese in Innenräumen aufhalten. Bekannt sind natürlich auch die Belastungen für der Menschen durch Zigarettenrauch in geschlossenen Räumen. Nicht umsonst setzt sich zunehmend die Erkenntnis durch, in bestimmten öffentlichen Gebäuden das Rauchen zu unterbinden.

Neben Zigarettenrauch sind als weitere Belastungen der Innenraumluft u.a. flüchtige organische Komponenten (Volatile Organic Components "VOC"), Stickoxide, Formaldehyd, aber auch Ozon zu nennen.

Aufgabe der vorliegenden Erfindung war es, einen Baustoff für die Anwendung im Innenbereich zu entwickeln, der in der Lage ist, Luftschadstoffe in Innenräumen zu vermindern.

Gelöst wird die Aufgabe durch ein Baumaterial enthaltend Bindemittel, Zuschläge und Zeolithe sowie die Verwendung dieser Baumaterialen zur Verminderung von Luftschadstoffen in Innenräumen.

Baumaterialien der erfindungsgemäßen Art sind insbesondere Putze, d.h. auf eine Oberfläche aufgebrachte, pastöse Massen.

In einer Ausführungsform der Erfindung sind die Zeolithe natürliche Zeolithe, d.h. solche, die aus natürlichen Lagerstätten abgebaut werden können. Zeolithe kommen nicht in Reinform vor, sondern vergesellschaftet mit weiteren Silikaten. Diese können in vorteilhafter Weise die Funktion der Zuschläge in den Baumaterialien übernehmen.

Überraschenderweise hat sich gezeigt, dass Zeolithe, die aus der Art der Natrolithe, Mesolithe, Skolezite oder Mischungen davon ausgewählt sind, besonders geeignet sind, da sie in wesentlich höherem Maße als sonstige Zeolithe in der Lage sind, zu einer Verminderung der Luftschadstoffe in Innenräume beizutragen. Es handelt sich bei diesen um Faserzeolithe, in denen senkrecht zur Richtung der Fasern weitere Kanäle vorhanden sind, in denen austauschbare Kationen oder Wassermoleküle enthalten sein können. Ein besonders bevorzugtes Zeolith ist das Natrolith.

Als Bindemittel kommen insbesondere Metakaolin, Weißkalkhydrat oder Mischungen davon in Frage. Auch andere Bindemittel, die üblicherweise in Putze enthalten sind, sind geeignet.

In einer Ausführungsform ist Metakaolin ein besonders bevorzugtes Bindemittel. Es scheint die Wirkungen der Zeolithe zu unterstützen.

Als Zuschlagsmittel können carbonatische Zuschläge wie Kalksteinkörnungen oder silikatische Zuschläge wie Quarzkörnungen eingesetzt werden. Grundsätzlich kommen alle Zuschläge in Frage, die auch bei der sonstigen Herstellung von Baumaterialien, insbesondere Putzen eingesetzt werden können. Ein besonders bevorzugter Zuschlag ist Ziegelmehl. Es wird vermutet, dass die Anwesenheit von Ziegelmehl die Porosität des Putzes erhöht und damit die Wirksamkeit der Zeolithe unterstützt.

Natürlich kann das Baumaterial weitere übliche Hilfsstoffe, insbesondere Hydrophobierungsmittel, Luftporenbildner, Verarbeitungshilfsmittel, etc. enthalten.

Besonders geeignet ist das erfindungsgemäße Material zum Abbau von Zigarettenrauch, flüchtigen organischen Substanzen (VOC), Stickoxiden, Formaldehyd und Ozon. Untersuchungen haben ergeben, dass überraschenderweise keine Adsorption der Schadstoffe erfolgt, sondern eine vermutlich katalytische Reaktion einen Abbau/Zersetzung der Luftschadstoffe fördert, so dass hierdurch dauerhaft wirksame Baustoffe erhalten werden.

Bevorzugte Mengen von Zeolithen liegen im Bereich von 0,1 bis 15 Gew.-% des trockenen Baumaterials, vorzugsweise 0,1 bis 5 Gew.-%, mehr bevorzugt 0,5 bis 3 Gew.-% und am meisten bevorzugt 0,5 bis 2 Gew.-%.

Bevorzugte Gehalte an Ziegelmehl liegen im Bereich von 1 bis 10 Gew.-%, mehr bevorzugt 3 bis 5 Gew.-%.

Bevorzugte Gehalte von Metakaolin liegen im Bereich von 1 bis 10 Gew.-%, mehr bevorzugt 4 bis 6 Gew.-%.

Bevorzugte Gehalte von Kalkhydrat liegen im Bereich von 5 bis 20 Gew.-%, mehr bevorzugt 5 bis 10 Gew.-%.

Die restlichen Stoffe sind typischerweise Zuschlagsstoffe wie Kalksteinkörnungen oder Quarzkörnungen.

Hilfsstoffe sind typischerweise insgesamt weniger als 1 Gew.-%.

Die Erfindung wird durch die nachfolgenden Beispiele näher erläutert.

### Beispiel 1

Untersuchung zur Bestimmung des Verhaltens von VOC auf eine Innenputzprobe. Die Versuche wurden unter statischen Bedingungen durchgeführt. Die 1 m³ große Edelstahlprüfkammer erfüllte die Anforderungen gemäß DIN EN13419-1: Bestimmung der Emission von flüchtigen organischen Verbindungen Teil 1: Emissionskammer-Prüfverfahren, Beuth Verlag 2003". Hierzu wurde eine Probe des erfindungsgemäßen Putzes in eine Aluminiumschale gefüllt, so dass eine gesamte Oberfläche von 1 m² erhalten wurde. Die Probe wurde für 3 h bei 58°C thermisch vorkonditioniert.

**Tabelle 1: Versuchsparameter.**

| Versuch | Beladung | N | Auftragsmenge | T | r.F. |
|---|---|---|---|---|---|
| | [m²/m³] | [h⁻¹] | kg/m² | [°C] | [%] |
| Vorkonditionierung | 1,0 | 1,0 | 19,91 | 58 | n.b. |
| Eigenemission | 1,0 | 0,4 | 19,91 | 23 | 50 |
| VOC-Injektion | 1,0 | 0 | 19,91 | 23 | 50 |
| Nachkonditionierung | 1,0 | 0 | 19,91 | 30 | 50 |
| Nachkonditionierung | 1,0 | 0 | 19,91 | 40 | 50 |

| | | | | | |
|---|---|---|---|---|---|
| n.b. = nicht bestimmt n = Luftwechsel T = Temperatur r.F. = relative Luftfeuchte Versuchsablauf: | | | | | |

1) Messung des Kammerblindwertes.
2) Beladung der Kammer.
3) Messung der VOC-Konzentration in der Prüfkammer nach 5 h und 24 h zur Bestimmung des VOC-Emissionspotentials der Beschichtung.
4) Injektion eines VOC-Testgemisches (11 unpolare -> polare Verbindungen).
5) Bestimmung der VOC-Abklingfunktionen.
6) Erhöhung der Temperatur von 23°C auf 30°C und 40°C in der Prüfkammer über je 3 h und Messung der VOC-Konzentration.

Zu einem definierten Zeitpunkt wurde ein VOC-Gemisch in die Kammer injiziert. Die VOC-Probenahme erfolgt über Tenax TA. Damit werden alle organischen Verbindungen im Siedebereich von ca. 50°C bis ca. 300°C erfasst. Die Quantifizierung der einzelnen Verbindungen erfolgt über GC/MS nach Thermodesorption.

VOC im Testgemisch:
- 2-Butanon (Methyl-ethyl-keton) (MEK)
- Toluol (Toi)
- n-Butylacetat (nBuac)
- 2-Butoxyethanol (Bugly)
- α-Pinen (aPin)
- Benzaldehyd (Benzal)
- Decan (C10)
- Limonen (Lim)
- 1,2-Dichlorbenzol(DCB)
- Nonanal (Nnl)

Mit diesen Komponenten wird sowohl dem in der Raumluft vorkommenden Substanzspektrum als auch den verschiedenen physikalischen Eigenschaften (z.B. Siedepunkt, Polarität) der VOC Rechnung getragen.

Zusätzlich waren die Komponenten zu erfassen, die von der Oberflächenbeschichtung während der Kammeruntersuchung freigesetzt wurden.

### Ergebnisse

Zunächst wurde die Wiederfindungsrate der Testsubstanzen in der leeren Prüfkammer bestimmt. Unter statischen Bedingungen konnten 8 Stunden nach Injektion noch mehr als 90 % der jeweils aufgegebenen Substanzmengen detektiert werden.

Die Messdaten der injizierten Substanzen sind in Tabelle 2 zusammengefasst. Unter den gewählten Versuchsbedingungen zeigte das Produkt eine hohe Effizienz, VOCs irreversibel aus der Kammerluft zu entfernen. Bereits nach 450 min (7,5 h) hatte die Anfangskonzentration um mehr als 80 % abgenommen. Nach 2880 min (ca. 48 h) waren mit Ausnahme von Nonanal für jede injizierte Substanz weniger als 4 % der Anfangskonzentration in der Kammer nachzuweisen.

**Tabelle 2**

| Messdaten der injizierten Substanzen | | | | | | | | | | |
|---|---|---|---|---|---|---|---|---|---|---|
| t (min) | MEK | Tol | nBuac | Bugly | aPin | Benzal | C10 | Lim | DCB | Nnl |
| | µg/m³ | | | | | | | | | |
| 30 | 218 | 310 | 164 | 27 | 251 | 107 | 156 | 154 | 261 | 33 |
| 90 | 158 | 219 | 103 | 13 | 185 | 66 | 104 | 104 | 178 | 23 |
| 150 | 90 | 121 | 66 | 7 | 108 | 42 | 66 | 65 | 117 | 18 |
| 210 | 58 | 79 | 55 | 6 | 71 | 52 | 52 | 50 | 97 | 17 |
| 270 | 40 | 59 | 41 | 3 | 51 | 30 | 43 | 39 | 78 | 14 |
| 330 | 28 | 63 | 32 | 2 | 34 | 27 | 34 | 30 | 63 | 13 |
| 390 | 19 | 23 | 25 | 1 | 22 | 18 | 26 | 22 | 49 | 14 |
| 450 | 13 | 22 | 20 | 1 | 14 | 17 | 21 | 17 | 38 | 16 |
| 1440 | 3 | 15 | 13 | <1 | 7 | 15 | 12 | 8 | 26 | 8 |
| 1620 | 3 | 23 | 8 | <1 | 2 | 10 | 6 | 4 | 13 | 10 |
| 1770 | 3 | 14 | 6 | < 1 | 1 | 8 | 4 | 2 | 10 | 11 |
| 2880 | 1 | 12 | 2 | < 1 | 5 | 4 | 1 | < 1 | 1 | 9 |
| 3180 | 3 | 14 | 2 | <1 | 1 | 4 | 1 | <1 | <1 | 14 |
| 3330 | 2 | 12 | 2 | <1 | 1 | 3 | 1 | <1 | <1 | 17 |
| 4320 | 3 | 19 | <1 | <1 | 6 | 3 | 1 | <1 | <1 | 15 |
| 4380 | <1 | 21 | <1 | <1 | 5 | <1 | <1 | <1 | <1 | 14 |
| 5820 | <1 | 12 | <1 | <1 | 2 | <1 | <1 | <1 | <1 | 9 |
| 5940 | <1 | 11 | <1 | <1 | 2 | <1 | <1 | <1 | <1 | 10 |
| 6060 | <1 | 5 | <1 | <1 | 2 | <1 | <1 | <1 | <1 | 17 |
| 6180 | <1 | 10 | <1 | <1 | 1 | <1 | <1 | <1 | <1 | 16 |

| | | | | | | | | | | |
|---|---|---|---|---|---|---|---|---|---|---|
| 30-4380 min: 23°C 5820-5940 min 30°C 6060-6180 min 40°C | | | | | | | | | | |

Auch nach der Temperaturerhöhung auf 30°C bzw. 40°C (siehe Tabelle 3) konnten nur Spuren an VOCs in der Prüfkammerluft nachgewiesen werden. Die vergleichsweise hohen Konzentrationen an Nonanal sind durch die Eigenemission des Produktes bedingt. Bei dieser Substanz überlagert die Eigenemission das eigentliche Experiment.

### Zusammenfassung

Das untersuchte Material adsorbiert unter den beschriebenen statischen Versuchsbedingungen effektiv und irreversibel flüchtige organische Verbindungen (VOCs) aus der Prüfkammeratmosphäre.

### Beispiel 2

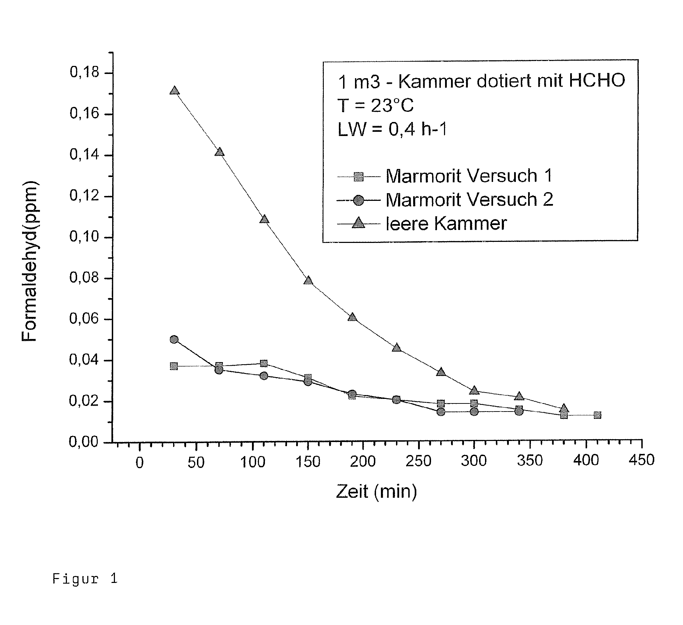

Eine Prüfkammer wie in Beispiel 1 beschrieben wurde mit Formaldehyd versetzt, allerdings unter dynamischen Bedingungen. Figur 1 zeigt für die leere Kammer, wie durch Luftwechsel die Konzentration an Formaldehyd über einen Zeitraum von 400 min abnimmt. Durch den Einsatz des erfindungsgemäßen Materials ist - obwohl die gleiche Menge Formaldehyd eingeführt wird - bereits nach etwa 30 min die Konzentration des Formaldehyds auf 15 bis 30% des Startwertes reduziert.

### Beispiel 3

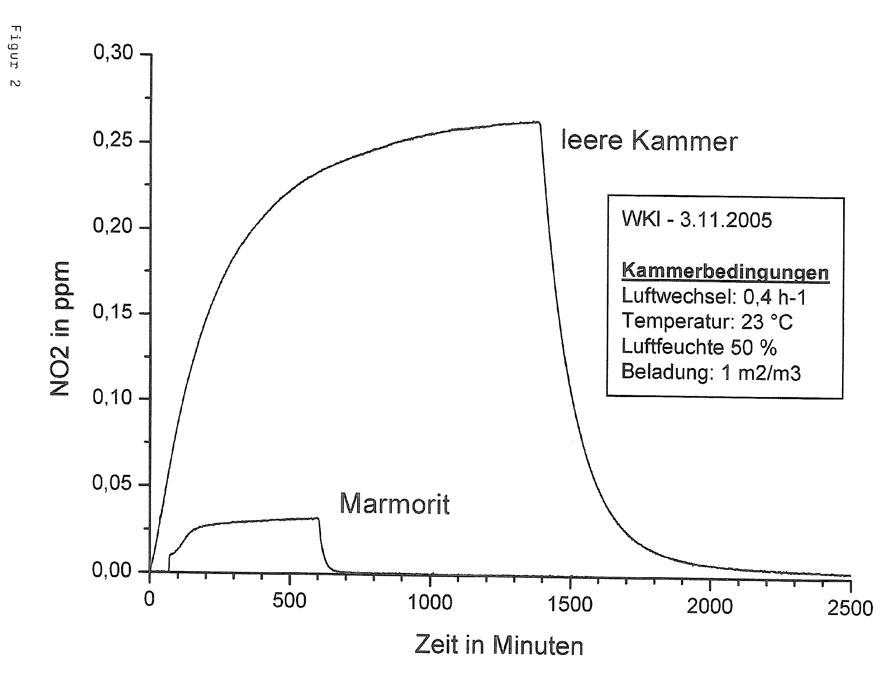

Unter vergleichbaren Prüfbedingungen wie im Beispiel 2 wurde eine Prüfkammer mit NO₂ beladen. Figur 2 zeigt, dass die Konzentration an NO₂ in der leeren Kammer zunimmt und sich einem Wert von etwa 0,3 ppm annähert, wird die weitere Zuführung von NO₂ gestoppt, wird das NO₂ durch die Luftwechsel ausgewaschen. Ist eine Probe des erfindungsgemäßen Materials anwesend, steigt die maximale Menge nur auf ca. ein Zehntel des Wertes der leeren Kammer.

## Patentansprüche

1. Verwendung von Baumaterialien enthaltend
- Bindemittel,
- Zuschläge,
- Zeolithe
zur Verminderung von Luftschadstoffen in Innenräumen.

2. Verwendung nach Anspruch 1, **dadurch gekennzeichnet, dass** die Zeolithe natürliche Zeolithe sind.

3. Verwendung nach Anspruch 2, **dadurch gekennzeichnet, dass** die natürlichen Zeolithe Bestandteile von silikatischen Zuschlägen sind.

4. Verwendung nach einem der Ansprüche 1 bis 3, **dadurch gekennzeichnet, dass** die Zeolithe Natrolithe, Mesolithe, Skolezite oder Mischungen davon sind.

5. Verwendung nach einem der Ansprüche 1 bis 4, **dadurch gekennzeichnet, dass** als Bindemittel unter anderem Metakaolin enthalten ist.

6. Verwendung nach einem der Ansprüche 1 bis 5, **dadurch gekennzeichnet, dass** als Bindemittel unter anderem Weißkalkhydrat enthalten ist.

7. Verwendung nach einem der Ansprüche 1 bis 6, **dadurch gekennzeichnet, dass** als Zuschläge carbonatische Zuschläge wie Kalksteinkörnungen und/oder silikatische Zuschläge wie Quarzkörnungen enthalten sind.

8. Verwendung nach einem der Ansprüche 1 bis 7, **dadurch gekennzeichnet, dass** als Zuschläge Ziegelmehl enthalten sind.

9. Verwendung nach einem der Ansprüche 1 bis 8, **dadurch gekennzeichnet, dass** zusätzlich Hilfsstoffe enthalten sind.

10. Verwendung nach Anspruch 9, **dadurch gekennzeichnet, dass** als Hilfsstoffe Hydrophobierungsmittel, Luftporenbildner und/oder Verarbeitungshilfsmittel zugesetzt sind.

11. Verwendung nach einem der Ansprüche 1 bis 10, **dadurch gekennzeichnet, dass** die Luftschadstoffe flüchtige organische Substanzen (VOC) umfassen.

12. Verwendung nach einem der Ansprüche 1 bis 10, **dadurch gekennzeichnet, dass** die Luftschadstoffe Stickoxide umfassen.

13. Verwendung nach einem der Ansprüche 1 bis 10, **dadurch gekennzeichnet, dass** Luftschadstoffe Formaldehyd umfassen.
